Europäisches Patentamt

European Patent Office

Office européen des brevets

(19)

(11) Veröffentlichungsnummer: **0 126 280**
**B1**

(12) **EUROPÄISCHE PATENTSCHRIFT**

(45) Veröffentlichungstag der Patentschrift:
15.07.87

(21) Anmeldenummer: 84104152.8

(22) Anmeldetag: 12.04.84

(51) Int. Cl.⁴: **B 22 D 11/126**, B 21 B 43/00,
B 21 B 43/02, B 65 G 47/52,
B 65 G 47/54

(54) Vorrichtung zum Querfördern von Metallabschnitten, insbesondere von Strangabschnitten in einer Stahlstranggiessanlage.

(30) Priorität: 21.04.83 US 487207

(43) Veröffentlichungstag der Anmeldung:
28.11.84 Patentblatt 84/48

(45) Bekanntmachung des Hinweises auf die Patenterteilung:
15.07.87 Patentblatt 87/29

(84) Benannte Vertragsstaaten:
BE CH DE FR GB IT LI

(56) Entgegenhaltungen:
EP - A - 0 064 179
DE - A - 2 555 280
DE - A - 2 829 063
DE - A - 3 009 743

(73) Patentinhaber: CONCAST SERVICE UNION AG,
Tödistrasse 7, CH-8027 Zürich (CH)

(72) Erfinder: Langner, Carl, 72 Route 306, Monsey New York 10952 (US)
Erfinder: Poran, Michael, 461 Hickory Street, Westwood New Jersey 07452 (US)
Erfinder: Szarka, Geza, 50 Kent Road, Glen Rock New Jersey 07452 (US)

(74) Vertreter: Zeller, Josef, CONCAST SERVICE UNION AG Tödistrasse 7, CH-8027 Zürich (CH)

## Beschreibung

Die Erfindung betrifft eine Vorrichtung zum Querfördern von Metallabschnitten, insbesondere von Strangabschnitten von Auslaufrollgängen in einer Stahlstranggiessanlage, wobei mindestens zwei Auslaufrollgänge für Metallabschnitte nebeneinander angeordnet sind und zum Abräumen der Metallabschnitte auf den Auslaufrollgängen sowie zum Übergeben auf ein Kühlbett die Querfördervorrichtung vorgesehen ist.

Bei Walzwerken und Stranggiessanlagen werden abgelängte Knüppel, Vorblöcke und Brammenriegel durch Querförderung von Auslaufrollgängen abgeschoben und auf ein Kühlbett gebracht. Sind mehrere Auslaufrollgänge nebeneinander angeordnet, werden die Strangabschnitte durch Abschieber gemeinsam auf ein nebengeordnetes Kühlbett geschoben. Zur Überbrückung der Zwischenräume zwischen den Rollgängen sind in der Regel Gleitkufen angeordnet, so dass sich eine Gleitebene bis zum Kühlbett bildet. Solche Gleitkufen werden durch mechanische und thermische Betriebseinflüsse in ihrer Höhenlage zu den Rollgangsrollen verändert. Es besteht daher die Gefahr, dass die Strangabschnitte entweder an vorstehenden Gleitkufen oder Rollen festhaken und diese abreissen. Derartige Schäden können auch bereits durch verzogene bzw. beim Schnitt deformierte Abschnitte verursacht werden.

Es ist weiter eine Vorrichtung zum Übergeben von Strangabschnitten von Auslaufrollgängen einer Mehrstranggiessanlage auf ein nebengeordnetes Kühlbett bekannt (DE-PS 25 55 280). Auch bei dieser Anlage ist ein Abschiebelineal zum Querfördern der Strangabschnitte vorgesehen. Die in Querförderrichtung angeordneten Gleitschienen sind mittels eines Hubantriebes im Sinne einer Parallelverschiebung bis oberhalb einer Auflageebene der Auslaufrollgänge anhebbar. Nach der durchgeführten Querverschiebung der Strangabschnitte werden die Gleitschienen durch Parallelverschiebung wieder in eine Ruhelage abgesenkt, die unterhalb der Auflageebene der Auslaufrollgänge liegt. Auch bei dieser Vorrichtung reiben die Knüppel entlang der Gleitschiene, so dass ein entsprechender Verschleiss nicht vermeidbar ist. Im weiteren sind für das Querfördern der Strangabschnitte eine Hubeinrichtung und zusätzlich eine Bewegungseinrichtung für das Abschiebelineal notwendig. Durch diese beiden Antriebsaggregate wird die Querfördereinrichtung kostspielig. Beim Abschieben mehrerer Stränge mit dem genannten Abschiebelineal werden die Strangabschnitte zusammengeschoben, und es sind oftmals anschliessend wieder Vereinzelungseinrichtungen notwendig, um die zusammengeschobenen Stränge wieder auf einem Kühlrechen zu verteilen.

Der Erfindung liegt die Aufgabe zugrunde, eine Vorrichtung zum Querfördern von Metallabschnitten zu schaffen, die die genannten Nachteile überwindet. Insbesondere soll eine Querfördereinrichtung geschaffen werden, die nur minimalen Verschleiss aufweist, nur geringe Quertransportkräfte erfordert, ein Minimum an Bewegungseinrichtungen benötigt und die Stränge auf eine vorbestimmte Distanz zusammenschiebt, dass sie ohne weitere Vereinzelung von einem Wendekühlbett übernommen werden können.

Gemäss der Erfindung wird diese Aufgabe durch die Summe der Merkmale von Patentanspruch 1 erreicht.

Mit der erfindungsgemässen Querfördervorrichtung werden die genannten Probleme bezüglich der Reibung zwischen Strang und stationärer Gleitschiene gelöst. Die erforderlichen Kräfte für die Querverschiebung sind relativ klein, weil die gesamte Querverschiebung auf einer rollenden Bewegung basiert. Im weiteren genügt ein einfacher und leistungsschwacher Antrieb für die Querförderung der Metallabschnitte. Zusätzliche Bewegungskomponenten sind nicht erforderlich. Der Gesamtaufbau der Anlage ist mit einfachen und preisgünstigen Komponenten herstellbar.

Der Neigungswinkel der geneigten Ebene kann leicht den örtlichen Verhältnissen angepasst werden. Die Erfindung schlägt jedoch vor, die geneigte Ebene zur Horizontalen in einem Winkel von weniger als 10° anzuordnen und diese Ebene in Querförderrichtung ansteigen zu lassen. Die Auflageflächen am Wagen können auf verschiedene Weise gestaltet werden. In der Regel werden diese Auflageflächen je nach der Art der Übergabe auf das Kühlbett gestaltet. Gemäss einem weiteren Merkmal der Erfindung ist es von Vorteil, wenn jedem Auslaufrollgang eine eigene, treppenartig angeordnete Auflagefläche zugewiesen ist.

Mit der erfindungsgemässen Vorrichtung ist es möglich, die Strangabschnitte während der Querförderung in einer gewünschten Distanz voneinander auf ein nebengeordnetes Kühlbett oder ein Wendekühlbett abzugeben. Als zusätzliches Ausführungsbeispiel wird vorgeschlagen, die Auflageflächen und die geneigte Ebene gegenseitig so abzustimmen, dass die treppenförmigen Auflageflächen breiter als die Strangabschnitte gewählt werden.

In bestimmten Fällen kann es von Vorteil sein, wenn für alle Strangabschnitte eine gemeinsame, in Querförderrichtung abfallende Auflagefläche vorgesehen ist.

Der Antrieb für die Bewegung des Wagens kann mit hydraulischen, elektrischen Antriebselementen etc. bewerkstelligt werden. Gemäss einem weiteren Ausführungsbeispiel wird vorgeschlagen, die Einrichtung für die Vor- und Rückwärtsbewegung des Wagens mit einer doppelt wirkenden Drahtseilwinde vorzusehen.

Zum Entladen des Wagens in der Endstellung wird gemäss einem weiteren Ausführungsbeispiel eine vertikal bewegbare Entladeeinrichtung vorgeschlagen.

Je nach der Art des nebengeordneten Kühlbettes kann es in bestimmten Fällen von Vorteil sein, wenn sich die Querfördervorrichtung selbst entladen kann. Gemäss einer weiteren Ausführungsform wird vorgeschlagen, dass die geneigte Ebene aus Trägern besteht, die Räder der Wagen führen, und dass diese Träger an einem Ende um eine Achse verschwenkbar angelenkt sind und am andern Ende mit einer Hubeinrichtung zur Veränderung der Neigung versehen sind. Eine solche Hubeinrichtung erlaubt eine Selbstentladung auf ein Kühlbett und zusätzlich eine Rückfahrt des Wagens, wenn bereits wieder neue Stränge auf den Ausförderrollen aufliegen oder in die Querförderstrecke einfahren. Anstelle der Verschwenkbarkeit können die Träger auch andere gewünschte Bewegungscharakteristika ausführen, um die genannten Vorteile zu erreichen.

Im nachfolgenden werden anhand von Figuren Ausführungsbeispiele der Erfindung beschrieben. Es zeigen:

Fig. 1 eine Draufsicht auf eine Querfördervorrichtung

Fig. 2 einen Vertikalschnitt nach der Linie II-II der Fig. 1 und

Fig. 3 ein weiteres Beispiel eines Wagens.

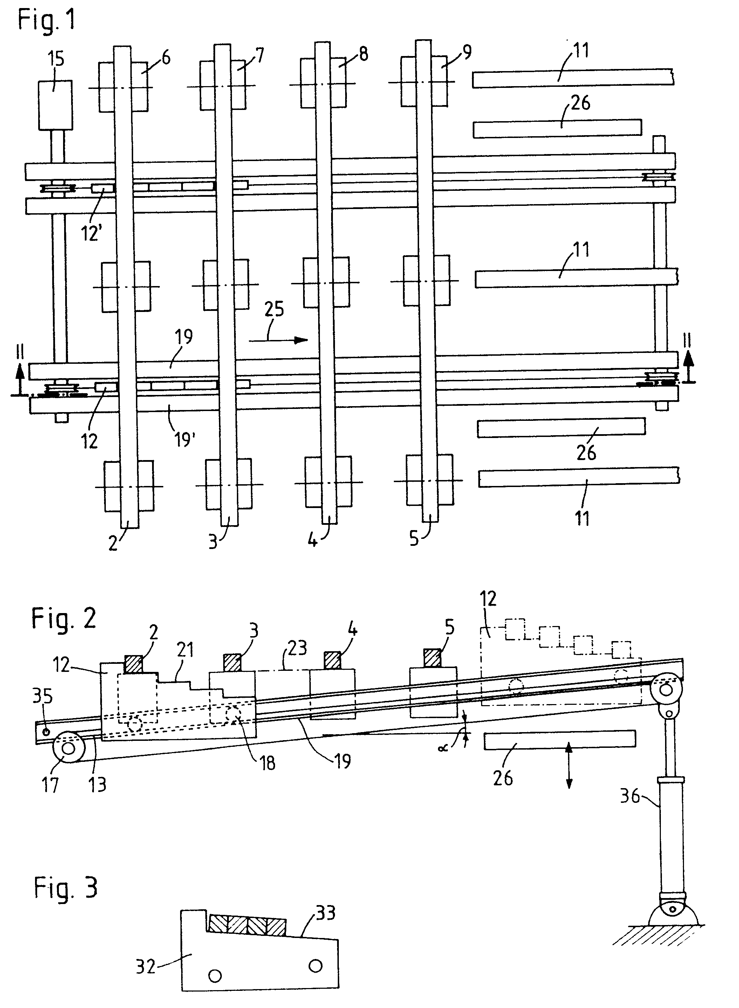

In den Fig. 1 und 2 sind mit 2, 3, 4, 5 Strangabschnitte bezeichnet, die auf Auslaufrollgängen 6, 7, 8, 9 bereit liegen, um durch Querförderung auf ein nebengeordnetes Kühlbett 11 gebracht zu werden. Das Kühlbett 11 ist in Fig. 1 andeutungsweise durch drei Träger dargestellt. Es kann stationär oder als Wendekühlbett etc. ausgebildet sein. Zum Abräumen der Strangabschnitte 2 bis 5 auf den Auslaufrollgängen 6 bis 9 und zum Beladen des Kühlbettes 11 sind zwei zur Querförderrichtung gehörende Wagen 12 und 12' vorgesehen. Diese Wagen 12, 12' sind auf einer zur Horizontalen geneigten Ebene 13 mittels einer Bewegungseinrichtung 15 verschiebbar. Sie besteht aus einer doppelt wirkenden Drahtseilwinde 17 für die Vor- und Rückwärtsbewegung des Wagens. Räder 18 laufen auf Flanschflächen von Trägern 19, 19'.

Der Wagen 12 kann mit einer oder mehreren Auflageflächen 21 für die Strangabschnitte 2 bis 5 versehen sein. In diesem Beispiel ist jedem Auslaufrollgang 6 bis 9 eine eigene Auflagefläche 21 zugeordnet. Sie sind in Treppenform ausgebildet. Die Auflageflächen 21 sind breiter als die Querschnittbreite der Strangabschnitte 2 bis 5. Sie bleiben, wie auf der rechten Seite in Fig. 2 strichpunktiert dargestellt, auch nach der Querförderung vereinzelt, d.h. mit vorbestimmtem gegenseitigem Abstand auf dem Wagen liegen.

Der Winkel der geneigten Ebene 13 zur Horizontalen und die Höhe zwischen den Auflageflächen 21 sowie eine Rollgangebene 23 der Auslaufrollgänge 6 bis 9 sind gegenseitig abgestimmt. Die jedem Auslaufrollgang 6 bis 9 zugeordnete Auflagefläche 21 der Wagen 12, 12' muss in der jeweiligen Abräumposition für die Abschnitte 2 bis 5 im wesentlichen mit der Höhe der Rollgangebene 23 übereinstimmen. Die geneigte Ebene 13 weist in den meisten Fällen einen Winkel α zur Horizontalen von weniger als 10° auf und steigt in Querförderrichtung 25 an.

Zum Entladen der beiden Wagen 12, 12' ist in der Endstellung, wie strichpunktiert in Fig. 2 dargestellt, eine vertikal bewegbare Entladeeinrichtung 26 zugeordnet. Diese Entladeeinrichtung 26 kann auch als Hubbalkenbett mit zusätzlicher Horizontalkomponente ausgebildet sein.

Die durch Träger 19 gebildete, geneigte Ebene kann an einem Ende um eine Achse 35 verschwenkbar an einem Fundamentlager angelenkt und am andern Ende mit einer Hubvorrichtung 36 versehen werden. Durch diese Hubvorrichtung wird es möglich, die Neigung der Träger 19 zu verändern. Neben einer Selbstentladung, die durch ein solches Absenken erreicht werden kann, wird es zusätzlich möglich, die Rückfahrt der Wagen 12, 12' zu bewerkstelligen, wenn bereits wieder Strangabschnitte 2 bis 5 auf die einzelnen Auslaufrollgänge 6 bis 9 eingefahren sind. Die Träger 19 werden in diesem Fall so weit abgesenkt, dass die Wagen 12 vollständig unterhalb die Rollgangebene 23 tauchen können.

Anstelle einer Vor- und Rückwärtsbewegung der Wagen 12, 32 kann es in bestimmten Fällen von Vorteil sein, die Wagen auf einer endlosen Führung anzuordnen und in einer Kreislaufbewegung zurückzuführen. Eine solche Rückführung der Wagen 12, 32 unterhalb der Auslaufrollgänge würde es ebenfalls ermöglichen, Strangabschnitte auf die Auslaufrollgänge einlaufen zu lassen, bevor die Wagen zurückgeführt sind.

In Fig. 3 ist ein Wagen 32 dargestellt, der anstelle der treppenförmig ausgebildeten Auflageflächen eine für alle Strangabschnitte 2 bis 5 gemeinsame, in Querförderrichtung 25 abfallende Auflagefläche 33 aufweist.

**Patentansprüche**

1. Vorrichtung zum Querfördern von Metallabschnitten (2–5), insbesondere von Strangabschnitten von Auslaufrollgängen in einer Stahlstranggiessanlage, wobei mindestens zwei Auslaufrollgänge (6–9) für Metallabschnitte (2–5) nebeneinander angeordnet sind und zum Abräumen der Metallabschnitte auf den Auslaufrollgängen sowie zum Übergeben auf ein Kühlbett (11) eine Querfördervorrichtung vorgesehen ist, dadurch gekennzeichnet, dass die Querfördervorrichtung Wagen (12, 12', 32) aufweist, die auf einer in Querförderrichtung (25) ansteigend geneigten Ebene (13) mittels einer Bewegungseinrichtung (15) verschiebbar sind, die Wagen (12, 12', 32) mit mindestens einer Auflagefläche (21, 33) für die Metallabschnitte (2–5) versehen sind und dass die geneigte Ebene (13) und die Höhe der Auflagefläche (21) für die Metallabschnitte (2–5) gegenseitig so abgestimmt sind, dass die Auflagefläche (21, 33) am Wagen (12, 12', 32) in der jedem Auslaufrollgang (6–9) zugeordneten Abräumposition im wesentlichen mit der Höhe der Rollgangebene (23) übereinstimmt.

2. Vorrichtung nach Anspruch 1, dadurch gekennzeichnet, dass die geneigte Ebene (13) zur Horizontalen einen Winkel (α) von weniger als 10° aufweist.

3. Vorrichtung nach einem der Ansprüche 1 bis 2, dadurch gekennzeichnet, dass jedem Auslaufrollgang (6–9) eine eigene, treppenartig angeordnete Auflagefläche (21) zugewiesen ist.

4. Vorrichtung nach einem der Ansprüche 1 bis 3, dadurch gekennzeichnet, dass die treppenartigen Auflageflächen (21) breiter als die Querschnittbreite der Metallabschnitte (2−5) sind.

5. Vorrichtung nach einem der Ansprüche 1 bis 2, dadurch gekennzeichnet, dass für alle Strangabschnitte (2−5) eine gemeinsame, in Querförderrichtung (25) abfallende Auflagefläche (33) vorgesehen ist.

6. Vorrichtung nach einem der Ansprüche 1 bis 5, dadurch gekennzeichnet, dass die Einrichtung für die Vor- und Rückwärtsbewegung des Wagens (12, 12′, 32) aus einer doppelt wirkenden Drahtseilwinde (17) besteht.

7. Vorrichtung nach einem der Ansprüche 1 bis 6, dadurch gekennzeichnet, dass den Wagen (12, 12′, 32) in der Endstellung eine vertikal bewegbare Entladeeinrichtung (26) zugeordnet ist.

8. Vorrichtung nach einem der Ansprüche 1 bis 6, dadurch gekennzeichnet, dass die geneigte Ebene (13) aus Trägern (19) besteht, die Räder (18) der Wagen (12, 12′, 32) führen und dass diese Träger (19) an einem Ende um eine Achse (35) verschwenkbar angelenkt und am anderen Ende mit einer Hubvorrichtung (36) zur Veränderung der Neigung versehen sind.

**Claims**

1. A device for transversely conveying metal sections (2−5), especially strand sections, from delivery roller tables in a continuous steel casting plant, at least two delivery roller tables (6−9) for metal sections (2−5) being arranged next to each other and a transversely conveying device being provided to remove the metal sections from the delivery roller tables and transfer them onto a cooling bed (11), characterized in that the transversely conveying device comprises cars (12, 12′, 32), which can be displaced on a plane (13) ascending in the direction (25) of transverse conveyance by means of a motive device (15), in that the cars (12, 12′, 32) are provided with at least one bearing surface (21, 33) for the metal sections (2−5) and in that the sloping plane (13) and the height of the bearing surface (21) for the metal sections (2−5) are so conformed to each other that the bearing surface (21, 33) on the car (12, 12′, 32) corresponds, in the removal position allocated to each delivery roller table (6−9), substantially to the height of the roller table plane (23).

2. A device according to claim 1, characterized in that the sloping plane (13) is at an angle (α) to the horizontal of less than 10°.

3. A device according to claim 1 or claim 2, characterized in that an individual, stepped bearing surface (21) is allocated to each delivery roller table (6−9).

4. A device according to any one of claims 1 to 3, characterized in that the stepped bearing surfaces (21) are wider than the cross-sectional width of the metal sections (2−5).

5. A device according to claim 1 or claim 2, characterized in that a common bearing surface (33) sloping downwards in the direction (25) of transverse conveyance is provided for all the strand sections (2−5).

6. A device according to any one of claims 1 to 5, characterized in that the device for the forward and backward movement of the car (12, 12′, 32) consists of a double-acting wire-rope winch (17).

7. A device according to any one of claims 1 to 6, characterized in that a vertically movable unloading device (26) is associated with the cars (12, 12′, 32) in the end position.

8. A device according to any one of claims 1 to 6, characterized in that the sloping plane (13) consists of supporting beams (19) which guide the wheels (18) of the cars (12, 12′, 32) and in that at one end these beams (19) are tiltably hinged around a shaft (35) and at the other end they are provided with a lifting mechanism (36) to change the angle of inclination.

**Revendications**

1. Dispositif pour transporter transversalement des sections métalliques (2−5), notamment des sections de barres, à partir de transporteurs de sortie à rouleaux compris dans une installation de coulée continue de l'acier, dans lequel au moins deux transporteurs de sortie à rouleaux (6−9) pour sections métalliques (2−5) sont disposés l'un à côté de l'autre et dans lequel il est prévu un dispositif de transport transversal pour enlever les sections métalliques situées sur les transporteurs de sortie à rouleaux et pour les transférer à un refroidissoir (11), caractérisé en ce que le dispositif de transport transversal comprend des chariots (12, 12′, 32) qui peuvent se déplacer en translation sur un plan incliné (13) qui monte dans le sens (25) du transport transversal (25), sous l'action d'un dispositif propulseur (15), les chariots (12, 12′, 32) étant munis d'au moins une surface d'appui (21, 33) pour les sections métalliques (2−5) et en ce que le plan incliné (13) et la hauteur de la surface d'appui (21) prévue pour recevoir les sections métalliques (2−5) sont calculés l'un en fonction de l'autre de telle manière que la surface d'appui (21, 33) située sur le chariot (12, 12′, 32) se trouve sensiblement au niveau du plan (23) des transporteurs de sortie à rouleaux (6−9) dans la position d'enlèvement associée à chaque transporteur de sortie à rouleaux (6−9).

2. Dispositif selon la revendication 1, caractérisé en ce que le plan incliné (13) présente par rapport à l'horizontale un angle (α) de moins de 10°.

3. Dispositif selon l'une des revendications 1 à 2, caractérisé en ce qu'à chaque transporteur de sortie à rouleaux (6−9) est associée une surface d'appui (21) qui lui correspond respectivement et qui est disposée en marche d'escalier.

4. Dispositif selon l'une des revendications 1 à 3, caractérisé en ce que les surfaces d'appui en escalier (21) sont de largeur supérieure à la largeur de section des sections métalliques (2−5).

5. Dispositif selon l'une des revendications 1 à 2, caractérisé en ce qu'il est prévu pour toutes les sections métalliques (2−5) une surface d'appui commune (33) qui est en pente descendante dans le sens (25) du transport transversal.

6. Dispositif selon l'une des revendications 1 à 5, caractérisé en ce que le dispositif servant à l'entraînement en avance et en recul du chariot (12, 12', 32) est constitué par un treuil à câble métallique (17) à double effet.

7. Dispositif selon l'une des revendications 1 à 6, caractérisé en ce qu'aux chariots (12, 12', 32) est associé, dans la position finale, un dispositif de déchargement (26) mobile dans la direction verticale.

8. Dispositif selon l'une des revendications 1 à 6, caractérisé en ce que le plan incliné (13) est composé de poutres (19) qui guident les roues (18) des chariots (12, 12', 32) et en ce que ces poutres (19) sont articulées à une extrémité pour osciller autour d'un axe (35) tandis qu'à l'autre extrémité, elles sont munies d'un dispositif élévateur (36) servant à modifier l'inclinaison.

0126280

Fig.1

Fig. 2

Fig. 3

7